# FASCICULE DE BREVET EUROPEEN

(11) **EP 1 480 816 B1**
(45) Date de publication et mention de la délivrance du brevet: **07.05.2014**
(21) Numéro de dépôt: 03725260.8
(22) Date de dépôt: 04.03.2003
(51) Int. Cl.: B32B 5/02, D04H 13/00, B60R 13/08, G10K 11/168

(54) **INSONORISANT DE TYPE MASSE-RESSORT**
MASSE-FEDER-SCHALLISOLIERUNG
MASS-SPRING ACOUSTIC INSULATION

(30) Priorité: 04.03.2002 FR 0202705
(43) Date de publication de la demande: 01.12.2004
(73) Titulaire: Faurecia Automotive Industrie, 92735 Nanterre (FR)
(72) Inventeur: DUVAL, Arnaud, D-35518 Gifhorn (DE); BONAMY, Frédéric, F-08110 Carignan (FR); HENRY, Roland, F-08210 Mouzon (FR)
(74) Mandataire: Domenego, Bertrand
(86) Numéro de dépôt international: PCT/FR2003/000696
(87) Numéro de publication internationale: WO 2003/074267

(56) Documents cités:
- WO-A-97/00989
- WO-A1-01/89883
- DE-A- 4 409 329
- DE-A- 19 708 188
- US-A- 4 118 531
- US-A- 5 298 694

## Description

L'invention concerne un insonorisant, en particulier destiné à être utilisé dans un véhicule automobile.

De multiples solutions ont déjà été proposées pour insonoriser un véhicule. En particulier, il est connu d'utiliser un complexe du type masse-ressort comprenant une première couche formant masse lourde et une deuxième couche formant ressort acoustique superposées. La masse lourde est viscoélastique, étanche à l'air, de densité élevée (généralement supérieure à 1 500 kg/m³). Elle recouvre la couche-ressort constituée d'un feutre comprenant des fibres naturelles recyclées et d'un liant.

Une telle solution présente des caractéristiques d'insonorisation relativement bonnes et un coût relativement faible.

Toutefois, compte tenu de la part de ces insonorisants dans la masse totale des véhicules, les constructeurs ont cherché à en réduire la masse afin de réduire la consommation des véhicules.

Aussi, il a été proposé, tel que décrit dans EP-A-0 887 483, d'utiliser en tant que couche-ressort des fibres frisottées comprises entre 3 décitex et 7 décitex. Il faut comprendre par fibres frisottées des fibres non rectilignes présentant des ondulations bi-directionnelles ou tri-directionnelles. Une telle solution permet une réduction sensible de la masse d'insonorisant, mais elle n'apporte pas toujours une insonorisation, et en particulier une isolation acoustique, d'excellente qualité.

Les documents WO 97/00989 et US-A-5298694 décrivent des couches formant ressort acoustique, mais ne décrivent pas l'utilisation d'une couche formant masse lourde.

Le document WO 01/89883 décrit un élément multicouche moulé ayant un système masse-ressort dont la masse est un film peu dense, et qui est destiné à être disposé à l'exterieur d'un habitacle.

Pour remédier aux inconvénients de ces différentes solutions, l'objet de l'invention consiste à définir une nouvelle solution optimisant le rapport entre l'isolation acoustique et le poids de l'insonorisant.

Pour ce faire, conformément à l'invention, la deuxième couche comprend en outre des microfibres comprises entre 0,1 décitex et 1 décitex, le poids de microfibres dans la couche-ressort est compris entre 25 % et 400 % du poids de fibres frisottées, et le poids des microfibres additionné à celui des fibres frisottées représente au moins 35% du poids de la couche-ressort.

L'avantage d'une telle solution consiste en ce que les microfibres et les fibres frisottées sont relativement complémentaires et combinent leurs effets pour obtenir des résultats homogènes sur une large gamme de fréquence.

En effet, la demanderesse a déterminé d'une part que si les fibres frisottées permettent une réduction considérable de poids par rapport à l'art antérieur tout en conservant une isolation satisfaisante en basses fréquences (en dessous de 400 Hz) et en moyennes fréquences (entre 400 Hz et 1 000 Hz), en revanche l'isolation en hautes fréquences (au-dessus de 1000 Hz) est relativement décevante. D'autre part, la demanderesse s'est aperçue qu'en intégrant des microfibres à la deuxième couche, l'isolation haute fréquence pouvait être sensiblement améliorée sans augmenter considérablement le poids d'insonorisant.

Comme les caractéristiques d'absorption acoustique de cet insonorisant sont en outre également satisfaisantes sur l'ensemble de la gamme des fréquences audibles et en particulier pour celles correspondant aux différents bruits relatifs aux véhicules automobiles, la solution de l'invention se révèle particulièrement adaptée pour de multiples applications dans le domaine de l'insonorisation des véhicules automobiles, notamment pour recouvrir le plancher, le coffre, le tablier, la tablette arrière et les panneaux de porte. Dès lors, il est possible d'obtenir une réduction de poids d'environ 50% sans réduire la qualité d'insonorisation perçue par rapport aux solutions de l'art antérieur.

Compte tenu des cahiers des charges dans le domaine automobile, des caractéristiques particulièrement favorables sont obtenues lorsque le poids de microfibres dans la couche-ressort est compris entre 80 % et 125 % du poids des fibres frisottées.

Afin de simplifier le processus de fabrication et donc réduire le prix de l'insonorisant, selon une caractéristique avantageuse conforme à l'invention, la couche-ressort comprend en outre des fibres bi-composantes formant liant.

Les fibres bi-composantes sont usuelles. A toutes fins utiles, il est toutefois rappelé que l'on entend par fibres bi-composantes des fibres comprenant une âme entourée par une enveloppe présentant une température de transition vitreuse inférieure à celle de l'âme. Ainsi, toutes les fibres peuvent être liées entre elles en même temps que l'insonorisant est mis en forme, par exemple par thermoformage.

Avantageusement, les fibres bi-composantes sont comprises entre 1 décitex et 3 décitex. Ainsi, les fibres bi-composantes permettent non seulement de lier entre elles les fibres, mais encore d'améliorer les caractéristiques d'isolation en hautes fréquences de l'insonorisant.

Une autre caractéristique avantageuse de l'invention concerne le fait que les fibres frisottées sont creuses et de forme hélicoïdale.

Les fibres se présentent alors sous forme de "ressorts à spires non-jointives" comportant en leur centre un passage de quelques microns de diamètre. Elles se révèlent particulièrement adaptées à l'obtention d'une bonne isolation acoustique.

Afin de réduire en outre le coût de l'insonorisant, conformément à une caractéristique complémentaire de l'invention, la couche-ressort comprend du feutre effiloché composé de fibres recyclées représentant entre 25 % et 50 % du poids de la deuxième couche.

Le rapport coût/insonorisation/poids est le plus favorable pour cette proportion de fibres recyclées. Si les fibres recyclées représentent une proportion trop importante, dans la mesure où la taille des fibres recyclées est aléatoire et s'étend sur une vaste gamme, il n'est plus possible de garantir un haut niveau d'isolation et d'absorption acoustique sur toute la gamme de fréquences.

Dans ces conditions, le rapport le plus avantageux entre la qualité d'insonorisation et le poids de l'insonorisant est obtenu pour une densité de la couche-ressort comprise entre 10 Kg/m³ et 40 Kg/m³.

Avantageusement, les fibres recyclées comportent essentiellement du coton. La répartition relativement uniforme de la taille des fibres de coton est favorable à l'obtention de bonnes caractéristiques d'absorption, en particulier en hautes fréquences.

Selon une autre caractéristique avantageuse de l'invention, les microfibres sont réalisées en matériau synthétique ou artificiel (matériau naturel, tel que la cellulose, retravaillé) et les fibres recyclées sont naturelles.

La réalisation des fibres en matériau synthétique permet d'obtenir des caractéristiques en particulier dimensionnelles précises, tandis que les fibres recyclées naturelles ont généralement de meilleures qualités d'insonorisation que les fibres recyclées synthétiques ou artificielles.

Les microfibres et les fibres frisottées pourront notamment être réalisées en polyester, en acrylique, en polyamide ou en polypropylène. Avantageusement, elles sont uniformément réparties dans la deuxième couche.

Le tableau suivant précise les caractéristiques de la couche ressort de deux insonorisants testés :

| Couche ressort | Fibres hélicoïdales | Fibres fines | Liant : Fibres bi-composantes |
|---|---|---|---|
| Insonorisant 1 | 3,3 dtex 38 % | 0,7 dtex 37% | 2,2 dtex 25% |
| Insonorisant 2 | 6,7 dtex 19% | 0,7 dtex 37% | 2,2 dtex 25 % |
| | 3,3 dtex 19% | | |

Des tests ont été menés avec des épaisseurs de 25 millimètres et 35 millimètres et un poids de 600g/m². Ces insonorisants dont la couche ressort ne comprend que des fibres synthétiques non recyclées, du polyester dans le cas des tests, se sont montrés quasiment aussi performants que des insonorisants classiques dont la couche ressort est constituée de feutre phénolique, deux fois plus lourd. Ils sont juste quelque peu moins efficaces en absorption. Autrement dit, en pratique, le gain en poids pourrait être légèrement inférieur à 50%.

L'insonorisant 2 est sensiblement plus performant en isolation basses fréquences que l'insonorisant 1, mais en contrepartie, il est inversement légèrement moins satisfaisant en isolation hautes fréquences.

Il faut comprendre par fibres synthétiques ou artificielles (par exemple en viscose) non recyclées des fibres fabriquées spécifiquement, afin de contrôler précisément leurs caractéristiques, notamment dimensionnelles. La matière les constituant peut en revanche inclure une proportion de plastique recyclé et refondu comme il est généralement pratiqué dans l'industrie plastique.

D'une manière générale, les insonorisants ayant apporté les meilleures caractéristiques d'insonorisation présentent les compositions suivantes :
- entre 35% et 40% de microfibres,
- entre 35% et 40 % de fibres frisottées,
- entre 24% et 28% de liant.

Les pourcentages indiqués ci-dessus et dans l'ensemble de la demande sont des proportions massiques.

Des essais ont été également menés sur un troisième insonorisant comprenant des fibres naturelles recyclées. La couche ressort de l'insonorisant 3 présentent les caractéristiques suivantes :
- 18% de fibres hélicoïdales creuses 6,7 dtex,
- 17% de fibres fines 0,7 dtex,
- 35% de coton effiloché recyclé,
- 30 % de fibres bi-composantes 4,4 dtex.

Les caractéristiques d'insonorisation de l'insonorisant 3 pour des épaisseurs et des densités comparables sont légèrement moins satisfaisantes que celles des insonorisants 1 et 2, mais son coût est inférieur du fait de l'utilisation pour environ 1/3 de fibres naturelles recyclées, en l'occurrence du coton effiloché.

Un quatrième insonorisant se différenciant du troisième par le remplacement des fibres bi-composantes 4,4 dtex par des fibres bi-composantes 2,2 dtex (et en réduisant légèrement leur proportion massique à 27%) a permis d'améliorer les caractéristiques d'isolation en hautes fréquences de l'insonorisant et en absorption sur l'ensemble de la gamme de fréquences.

## Revendications

1. Insonorisant en particulier pour automobile, du type masse-ressort, comprenant une première couche formant masse lourde et une deuxième couche recouverte par la première et formant ressort acoustique, la couche ressort comprenant des fibres frisottées comprises entre 3 décitex et 7 décitex et un liant pour maintenir entre elles les fibres frisottées, ledit insonorisant étant **caractérisé en ce que** :
- la couche ressort comprend en outre des microfibres comprises entre 0,1 décitex et 1 décitex,
- le poids de microfibres dans la couche ressort est compris entre 25 % et 400 % du poids de fibres frisottées, et
- le poids des microfibres et le poids des fibres frisottées représentent ensemble au moins 35 % du poids de la couche ressort.

2. Insonorisant selon la revendication 1, **caractérisé en ce que** le poids de microfibres dans la couche ressort est compris entre 80 % et 125 % du poids des fibres frisottées.

3. Insonorisant selon la revendication 1 ou la revendication 2, **caractérisé en ce que** la couche ressort comprend en outre des fibres bi-composantes formant liant.

4. Insonorisant selon la revendication 3, **caractérisé en ce que** les fibres bi-composantes sont comprises entre 1 décitex et 3 décitex.

5. Insonorisant selon l'une quelconque des revendications précédentes, **caractérisé en ce que** les fibres frisottées sont creuses et de forme hélicoïdale.

6. Insonorisant selon l'une quelconque des revendications précédentes, **caractérisé en ce que** la couche ressort comprend du feutre effiloché composé de fibres recyclées représentant entre 25 % et 50 % du poids de la couche ressort.

7. Insonorisant selon la revendication 6, **caractérisé en ce que** les fibres recyclées comportent essentiellement du coton.

8. Insonorisant selon la revendication 6 ou la revendication 7, **caractérisé en ce que** la couche ressort présente une densité comprise entre 10 kg/m³ et 40 kg/m³.

9. Insonorisant selon l'une quelconque des revendications 6 à 8, **caractérisé en ce que** les microfibres et les fibres frisottées sont en matériau synthétique et les fibres recyclées sont naturelles.

10. Insonorisant selon l'une quelconque des revendications 1 à 5, **caractérisé en ce que** la couche ressort comprend en proportions massiques :
- entre 35 % et 40 % de microfibres,
- entre 35 % et 40 % de fibres frisottées, et
- entre 24 % et 28 % de liant.

## Patentansprüche

1. Schalldämmendes Material der Art Masse-Feder, insbesondere für Kraftfahrzeuge, das eine erste, eine schwere Masse bildende Schicht und eine zweite, von der ersten bedeckte Schicht, die eine akustische Feder bildet, umfasst, wobei die Federschicht gekrauste Fasern zwischen 3 Dezitex und 7 Dezitex und ein Bindemittel aufweist, um die gekrausten Fasern untereinander zu binden, wobei das schalldämmende Material **dadurch gekennzeichnet ist, dass**:
- die Federschicht außerdem Mikrofasern zwischen 0,1 Dezitex und 1 Dezitex umfasst,
- das Gewicht der Mikrofasern in der Federschicht zwischen 25% und 400% des Gewichts an gekrausten Fasern liegt und
- das Gewicht der Mikrofasern und das Gewicht der gekrausten Fasern zusammen mindestens 35% des Gewichts der Federschicht repräsentieren.

2. Schalldämmendes Material nach Anspruch 1, **dadurch gekennzeichnet, dass** das Gewicht der Mikrofasern in der Federschicht zwischen 80% und 125% des Gewichts der gekrausten Fasern liegt.

3. Schalldämmendes Material nach Anspruch 1 oder Anspruch 2, **dadurch gekennzeichnet, dass** die Federschicht außerdem Zweikomponentenfasern umfasst, die das Bindemittel bilden.

4. Schalldämmendes Material nach Anspruch 3, **dadurch gekennzeichnet, dass** die Zweikomponentenfasern zwischen 1 Dezitex und 3 Dezitex liegen.

5. Schalldämmendes Material nach einem beliebigen der vorhergehenden Ansprüche, **dadurch gekennzeichnet, dass** die gekrausten Fasern hohl sind und spiralförmig ausgebildet sind.

6. Schalldämmendes Material nach einem beliebigen der vorhergehenden Ansprüche, **dadurch gekennzeichnet, dass** die Federschicht zerfaserten Filz umfasst, der aus rezyklierten Fasern zusammengesetzt ist und zwischen 25% und 50% des Gewichts der Federschicht aufweist.

7. Schalldämmendes Material nach Anspruch 6, **dadurch gekennzeichnet, dass** die rezyklierten Fasern im Wesentlichen Baumwolle umfassen.

8. Schalldämmendes Material nach Anspruch 6 oder Anspruch 7, **dadurch gekennzeichnet, dass** die Federschicht eine Dichte zwischen 10 kg/m³ und 40 kg/m³ aufweist.

9. Schalldämmendes Material nach einem beliebigen der Ansprüche 6 bis 8, **dadurch gekennzeichnet, dass** die Mikrofasern und die gekrausten Fasern aus synthetischem Material bestehen und die rezyklierten Fasern Naturfasern sind.

10. Schalldämmendes Material nach einem beliebigen der Ansprüche 1 bis 5, **dadurch gekennzeichnet, dass** die Federschicht in Massenanteilen umfasst:
- zwischen 35% und 40% Mikrofasern,
- zwischen 35% und 40% gekrauste Fasern und
- zwischen 24% und 28% Bindemittel.

## Claims

1. Acoustic insulation, in particular for a motor vehicle, of the mass-spring type, comprising a first layer forming a heavy mass and a second layer which is covered by the first layer and forms an acoustic spring, the spring layer comprising crimped fibres of from 3 decitex to 7 decitex and a binder for holding together the crimped fibres, said acoustic insulation being **characterised in that**:
- the spring layer further comprises microfibres of from 0.1 decitex to 1 decitex,
- the weight of microfibres in the spring layer is from 25% to 400% of the weight of crimped fibres, and
- the weight of the microfibres and the weight of the crimped fibres together represent at least 35% of the weight of the spring layer.

2. Acoustic insulation according to claim 1, **characterised in that** the weight of microfibres in the spring layer is from 80% to 125% of the weight of the crimped fibres.

3. Acoustic insulation according to claim 1 or claim 2, **characterised in that** the spring layer further comprises two-component fibres forming the binder.

4. Acoustic insulation according to claim 3, **characterised in that** the two-component fibres are from 1 decitex to 3 decitex.

5. Acoustic insulation according to any one of the preceding claims, **characterised in that** the crimped fibres are hollow and of helical shape.

6. Acoustic insulation according to any one of the preceding claims, **characterised in that** the spring layer comprises torn felt composed of recycled fibres representing from 25% to 50% of the weight of the spring layer.

7. Acoustic insulation according to claim 6, **characterised in that** the recycled fibres substantially comprise cotton.

8. Acoustic insulation according to claim 6 or claim 7, **characterised in that** the spring layer has a density of from 10 kg/m³ to 40 kg/m³.

9. Acoustic insulation according to any one of claims 6 to 8, **characterised in that** the microfibres and the crimped fibres are made of synthetic material and the recycled fibres are natural.

10. Acoustic insulation according to any one of claims 1 to 5, **characterised in that** the spring layer comprises, in proportions by mass:
- from 35% to 40% of microfibres,
- from 35% to 40% of crimped fibres, and
- from 24% to 28% of binder.
